(19) Europäisches Patentamt
European Patent Office
Office européen des brevets

(11) **EP 3 267 353 A1**

(12) **EUROPEAN PATENT APPLICATION**

(43) Date of publication:
**10.01.2018 Bulletin 2018/02**

(21) Application number: **17181127.6**

(22) Date of filing: **07.08.2013**

(51) Int Cl.:
*G06F 21/62* (2013.01)   *G06Q 30/02* (2012.01)
*H04N 21/258* (2011.01)   *H04N 21/475* (2011.01)
*H04N 21/482* (2011.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.02.2013 US 201361761330 P**

(62) Document number(s) of the earlier application(s) in
accordance with Art. 76 EPC:
**13751005.3 / 2 954 454**

(71) Applicant: **Thomson Licensing
92130 Issy-les-Moulineaux (FR)**

(72) Inventors:
• **IOANNIDIS, Efstratios
Boston, MA Massachusetts 02115 (US)**
• **WEINSBERG, Ehud
Menlo Park, CA California 94025 (US)**
• **BHAGAT, Smriti
San Francisco, CA California 94110 (US)**
• **FAWAZ, Nadia
Santa Clara, CA California 95050 (US)**
• **MONTANARI, Andrea
SUNNYVALE, CA California 94087 (US)**
• **TAFT, Nina Anne
SAN FRANCISCO, CA California 94114 (US)**

(74) Representative: **Ståhl, Björn Niclas
TECHNICOLOR
1-5, rue Jeanne d'Arc
92130 Issy-les-Moulineaux (FR)**

Remarks:
This application was filed on 13-07-2017 as a
divisional application to the application mentioned
under INID code 62.

(54) **PRIVACY PROTECTION AGAINST CURIOUS RECOMMENDERS**

(57)   A method and apparatus for protecting user privacy in a recommender system are described including determining what information to release to a user for a movie, transmitting the information to the user, accepting obfuscated input from the user and estimating the user's non-private feature vector. Also described are a method and apparatus for protecting user privacy in a recommender system including receiving movie information, accepting a user's movie feedback, accepting user's private information, calculating an obfuscation value and transmitting the obfuscation value.

FIG. 4

**Description**

CROSS-REFERENCE

This application claims priority to U.S. provisional application serial number 61/761,330 filed on February 6, 2013, entitled "PRIVACY PROTECTION AGAINST CURIOUS RECOMMENDERS", incorporated herein by reference.

FIELD OF THE INVENTION

The present invention is related to protecting privacy information while allowing a recommender to provide relevant personalized recommendations.

BACKGROUND OF THE INVENTION

Several recent publications study the threat of inferring demographics from user-generated data. Closest to the present invention, Weinsberg et al., Blurme: inferring and obfuscating user gender based on ratings, Proceedings of the Sixth ACM Conference on Recommender Systems, 2012 shows that gender can be inferred from movie ratings and proposes heuristics for mitigating the resulting privacy risk. However, Weinsberg's proposed obfuscation method specifically targets a logistic regression method for inferring gender. In contrast, the present invention follows a principled approach, allowing proving strong privacy guarantees against an arbitrary inference method.

The definition of privacy in the present invention is motivated by, and a limiting case of, the notion of differential privacy. Differential privacy has been applied to fields such as data mining, social recommendations and recommender systems. These works assume a trusted database owner and focus on making the output of the application differentially private. In contrast, in the present invention, a setup is studied where the recommender is curious, and users wish to protect against statistical inference of private information from feedback they submit to the recommender.

Several theoretical frameworks that model privacy against statistical inference under accuracy constraints exist. These approaches assume a general probabilistic model linking private and non-private variables, and ensure privacy by distorting the non-private variables prior to their release. Although general, the application of these frameworks requires knowledge of the joint distribution between private data and data to be released, which may be difficult to obtain in a practical setting. The assumption of a linear model in the present invention, which is strongly supported by empirical evidence, renders the problem tractable. Most importantly, it allows the method of the present invention to characterize the extent of data disclosure necessary on the recommender's side to achieve an optimal privacy-accuracy trade-off, an aspect that is absent from all of the aforementioned works.

SUMMARY OF THE INVENTION

Recommender systems can infer demographic information such as gender, age or political affiliation from user feedback. The present invention proposes a framework for data exchange protocols (steps, acts) between recommenders and users, capturing the tradeoff between the accuracy of recommendations, user privacy and the information disclosed by the recommender.

The present invention allows a user to communicate a distorted version of his/her ratings to a recommender system, in such a way that the recommender has no way of inferring some demographic information the user wishes to hide, while allowing the recommender to still provide relevant, personalized recommendations to the user.

Users of online services are routinely asked to provide feedback about their experience and preferences. This feedback can be either implicit or explicit, and can take numerous forms, from a full review to a five-star rating, to choices from a menu. Such information is routinely used by recommender systems to provide targeted recommendations and personalize the content that is provided to the user. Often, the statistical methods used to generate recommendations produce a user 'profile' or feature vector. Such a profile can expose personal information that the user might consider private, such as their age, gender, and political orientation. This possibility has been extensively documented on public datasets. Such a possibility calls for mechanisms that allow privacy-conscious users to benefit from recommender systems, while also ensuring that information they wish to protect is not inadvertently disclosed or leaked through their feedback, thereby incentivizing user participation in the service.

A common approach to reducing such disclosure or leakage is by distorting the feedback reported to the recommender. There is a natural tradeoff between recommendation quality and user privacy. Greater distortion may lead to better obfuscation but also less accurate profiles. A contribution of the present invention is to identify that there is a third term in this tradeoff, which is the data the recommender discloses to the users in order to obscure their private values. To illustrate this, notice that absolute privacy could be achieved if the recommender discloses to the user all of the data and algorithms used to produce a user profile. The user may then be able to run a local copy of the recommendation system without ever sending any feedback to the recommender. This is clearly private. However, it is also untenable from the recommender's perspective, both for practical reasons (efficiency and code maintenance) and crucially, for commercial reasons since the recommender may be charging a fee, monetizing both the data that it has collected and the algorithms that it has developed. Disclosing the data and algorithms to the user or possible competitors is clearly a disadvantage.

On the other hand, some data disclosure is also necessary. If a user wishes to hide his/her political affiliation prior to releasing his/her feedback, the knowledge of any bias brought by political affiliation can be used by the user to negate this effect. The recommender detecting such bias from collected data can reveal it to privacy-conscious users.

This state of affairs raises several questions. What is the minimal amount and nature of information the recommender needs to disclose to privacy-conscious users to incentivize their participation? How can this information be used to distort one's feedback, to protect one's private features (such as gender, age, political affiliation etc.) while allowing the recommender to estimate the remaining on-private features? What estimation method yields the highest accuracy when applied to distorted feedback?

The present invention proposes a formal mathematical framework for addressing the above questions, encompassing three protocols:

(a) Data disclosure in which the recommender engages
(b) The obfuscation method applied to the user's ratings, and
(c) The estimation method applied to infer the non-private user features.

The specific implementation of the above three protocols provides perfect protection to the user's private information, while also ensuring that the recommender estimates non-private information with the best possible accuracy. Crucially, the date disclosure of the recommender is minimal. No smaller disclosure can lead to an accuracy equal to or better than the proposed implementation.

The proposed protocols were evaluated on real datasets establishing that they indeed provide excellent privacy guarantees in practice, without significantly affecting the recommendation accuracy.

A method and apparatus for protecting user privacy in a recommender system are described including determining what information to release to a user for a movie, transmitting the information to the user, accepting obfuscated input from the user and estimating the user's non-private feature vector. Also described are a method and apparatus for protecting user privacy in a recommender system including receiving movie information, accepting a user's movie feedback, accepting user's private information, calculating an obfuscation value and transmitting the obfuscation value.

BRIEF DESCRIPTION OF THE DRAWINGS

The present invention is best understood from the following detailed description when read in conjunction with the accompanying drawings. The drawings include the following figures briefly described below:

Figs. 1(a) and 1(b) show the distribution of inference probabilities for males and females before obfuscation after the standard obfuscation scheme with selection using the MovieLens dataset and logistic inference.
Fig. 1(c) shows the RMSE-AUC tradeoff.
Fig. 2 is a flowchart of the recommender system of the present invention.
Fig. 3 is an enlarged view of the recommender portion of the recommender system of the present invention.
Fig. 4 is an enlarged view of the user portion of the recommender system of the present invention.
Fig. 5 is a block diagram of the recommender portion of the recommender system of the present invention.
Fig. 6 is a block diagram of the user portion of the recommender system of the present invention.

DETAILED DESCRIPTION OF THE PREFERRED EMBODIMENTS

The setup considered in the present invention comprises a recommender and a user. The recommender solicits user feedback on items which, for the sake of concreteness, are referred to as 'movies'. The user's feedback (e.g., 1-5 star ratings) for each item is sampled independently from a probability distribution parameterized by two vectors: a movie profile $v_i$ and a user profile x. The user profile x is of the form $(x_0; \mathbf{x})$, where $x_0$ is distinguishable binary feature that the user wishes to keep private (e.g., his/her gender), and $\mathbf{x}$ is a non-private component. It should be noted that though the user knows $x_0$, he/she is unaware of $\mathbf{x}$:this would be the case if e.g., the features used by the recommender are unknown to the user, or even computed through a process called matrix factorization and are therefore latent.

The recommender knows the movie profiles $v_i$ and wishes to learn the user's profile x. The recommender's purpose is to predict the user's feedback for other movies and make recommendations. The user wishes to benefit from recommendations, but is privacy-conscious with respect to his/her variable $x_0$, and does not wish to release this to the recommender. To incentivize the user's participation, the goal of the present invention is to design a protocol for exchanging information between the recommender and the user that has three salient properties. Informally, the three salient properties are:

(a) At the conclusion of the protocol, the recommender estimates **x**, the non-private component of $x$, as accurately as possible.
(b) The recommender learns nothing about $x_0$, the user's private variable.
(c) The user learns as little as possible about the movie profile $v_i$ of each item $i$.

The first property ensures that, at the conclusion of the protocol, the recommender learns the non-private component of a user's profile, and can use it to suggest new movies to the user, which enables the main functionality of the recommender. The second property ensures that a privacy-conscious user benefits from recommendations without disclosing his/her private variable, thereby incentivizing participation. Finally, the third property ensures that movie profiles are not made publicly available in their entirety. This ensures that the recommender's competitors cannot use profiles, whose computation requires resources and which are monetized through recommendations.

To highlight the interplay between these three properties, three "non-solutions" are discussed. First, consider the protocol in which the user discloses his/her feedback to the recommender "in the clear": this satisfies (a) and (c) but not (b), as it would allow the recommender to estimate both **x** and $x_0$ through appropriate inference methods. In the second protocol, the recommender first reveals all movie profiles $v_i$ to the user; the recommender estimates **x** locally, again through inference, and subsequently sends this to the recommender. This satisfies (a) and (b), but not (c). Finally, the "empty" protocol (no information exchange) satisfies (b) and (c), but not (a).

More specifically, it is assumed that the user is characterized by a feature vector $x \in \mathbb{R}^{d+1}$. This feature vector has one component that corresponds to a characteristic that the user wants to keep private. It is assumed that this feature is binary, the generalization to multiple binary features being straightforward. Formally, x = $(x_0, \mathbf{x})$, where **x** = $(x_1, ..., x_d) \in \mathbb{R}^d$ and $x_0 \in \{+1,-1\}$ is the private feature. As a running example, it can be assumed that the user wants to keep private his/her gender, that is encoded as $x_0 \in \{+1,-1\}$.

The recommender solicits feedback for $M$ movies, whose set is denoted by $[M] \equiv \{1, ...,M\}$. In particular, each movie is characterized by a feature vector $v_i = (v_{i0}, \mathbf{v}_i) \in \mathbb{R}^{d+1}$, where $\mathbf{v}_i = (v_{i1}, ..., v_{id}) \in \mathbb{R}^d$. Attention is restricted to vectors $v_i$ such that $\mathbf{v}_i \neq 0$. The set of all such vectors is denoted by $\mathbb{R}_{-0}^{d+1} = \{(v_0, v) \in \mathbb{R}^{d+1} : v \neq \mathbf{0}\}$ and the feature vector of movies for which feedback is solicited by $\mathbb{V} \equiv \{v_i, i \in [M]\} \subseteq \mathbb{R}_{-0}^{d+1}$.

It is assumed that the recommender maintains the feature vectors in a database. Constructing such a database is routinely done by recommender algorithms. Features are typically computed through a combination of matrix factorization techniques (and are, hence, latent), as well as explicit functions of the movie descriptors (such as, e.g., genres, plot summaries, or the popularity of cast members). In both cases, these vectors (or even the features identified as relevant) can be used by a competitor, and are, hence, subject to non-disclosure.

The user feedback for movie $i \in [M]$ is denoted by $r_i \in \mathbb{R}$. $r_i$ is restricted to a specific bi-linear model, whose for is known to both the recommender and the user. In particular, $\text{let } \langle a, b \rangle \equiv \sum_{i=1}^{k} a_i b_i$ the usual scalar product in $\mathbb{R}^k$. It is assumed that there exists a probability distribution Q on $\mathbb{R}$, such that for all $i \in [M]$:

$$r_i = \langle v_i, x \rangle + z_i = \langle \mathbf{v_i, x} \rangle + v_{i0} + z_i, z_i \sim Q, \qquad (1)$$

where $z_i$ are independent "noise" variables, with $E(z) = 0$, $E(z^2) = \sigma^2 < \infty$.

Despite its simplicity, this model is strongly supported by empirical evidence. Indeed, it is the underlying model for numerous prediction methods based on low-tank approximation, such as matrix factorization, singular value decomposition etc. It should be noted that the restriction to movie vectors in $\mathbb{R}_{-0}^{d+1}$ makes sense under (1). Indeed, if the purpose of the recommender is to retrieve **x**, the feedback for a movie for which **v** = **0** is clearly uninformative. It is assumed that the recommender maintains feature vectors $\mathcal{V}$ in a database. Constructing such a database is routinely done by recommender algorithms. Features are typically computed through a combination of matrix factorization techniques (and, hence, latent), as well as explicit functions of the movie descriptors such as genres, plot summaries or the popularity of cast members. These vectors (or even the features identified as relevant) can be used by a competitor, and are, hence, subject to non-disclosure.

The user does not have access to this database, and does not know a priori values of these feature vectors. In addition, the user knows his/her private variable $x_0$ and either knows or can easily generate her feedback $r_i$ to each movie $i \in [M]$. Nevertheless, the user does not know a-priori the remaining feature values $x \in \mathbb{R}^d$, as "features" corresponding to each coordinate of $v_i$ are either "latent" or not disclosed.

The privacy preserving recommendation method and system of the present invention includes the following protocol between the user and the recommender, comprising three steps:

1. Data Disclosure Protocol. This is a mapping $L: \mathbb{R}_{\geq 0}^{d+1} \to \mathcal{L}$, with $\mathcal{L}$ being a generic set. $\mathcal{L}$ and $\mathcal{Y}$ will be measureable spaces, which include $\mathbb{R}^k$. This mapping is implemented at the recommender and describes the amount of data disclosed from its database $V$ publicly. In particular, for each movie $i \in [M]$, the recommender releases to the user some information $\ell_i = L(v_i) \in \mathcal{L}$. $L(V)$ denotes the vector $\ell \in \mathcal{L}^M$ with coordinates $\ell_i, i \in [M]$. In practice, $L(V)$ is made public, as it is needed by all potential privacy-conscious users that wish to interact with the recommender.

2. Obfuscation Protocol. This is a mapping $Y: \mathbb{R}^M \times \{+1, -1\} \times \mathcal{L}^M \to \mathcal{Y}$, for $Y$, where $\mathcal{Y}$ is again a generic set. The mapping describes how the user feedback is modified (obfuscated) before being released to the recommender. The mapping is implemented as a program on the user's own computer. In particular, the user (algorithm on the user's computer) enters his/her vector of feedback values $r = (r_1, ..., r_M) \in \mathbb{R}^M$, his/her private characteristic $x_0$ as well as the data disclosure $\ell = L(V) \in \mathcal{L}^M$. The program combines these quantities and returns to the recommender the obfuscated value $y = Y(r, x_0, \ell) \in \mathcal{Y}$.

3. Estimator. This is a mapping of the form: $\hat{x}: \mathcal{Y} \times (\mathbb{R}_{\geq 0}^{(d+1)})^M \to \mathbb{R}^d$. Given the movie feature vectors $V \subset \mathbb{R}_{\geq 0}^{d+1}$ and the corresponding obfuscated user feedback $y \in Y$, the mapping yields an estimate $\hat{x}(y,v)$ of the user's non-private feature vector $x$. The estimator is implemented as a program at the recommender.

The triplet $\mathcal{R} = (L, Y, \hat{x})$ is referred to as a recommendation system. Note that the functional forms of all three of these components are known to both parties: e.g., the recommender knows the obfuscation protocol $Y$. Both parties are honest but curious: both parties (recommender and user) follow the protocol, but if at any step either party can extract more information than what is intentionally revealed, they do so. Both protocols $L$ and $Y$ can be randomized. In the following, the probability and expectation with respect to the feedback model as well as protocol randomization, given $x$, $V$ is denoted by $P_x, v, E_x, v$.

Next, the basic quality metrics for a privacy-preserving recommendation system, including accuracy of the recommendation system, privacy of the user, and data disclosure extent, corresponding to the properties (a)-(c) discussed above.

Formalization of privacy for the obfuscated feedback $Y$ is motivated by differential privacy. The context of the present invention differs from the prior art in that $Y(r, x_0, \ell)$ depends on $x$, $\ell$ and $x_0$, but the present invention is only concerned with the privacy with respect to the private information $x_0$.

**Definition 1.** A recommendation system is $\varepsilon$-differentially private if, for any $x \in X$ and any $v \in V$, the following occurs. If $\ell = (\ell_1, ..., \ell_M)$ denotes the information leaked or divulged from database $V$, and $r \in \mathbb{R}^M$ the user feedback, then for any event $A \subseteq y$,

$$e^{-\varepsilon} \leq \frac{P_{(+1,x),v}(Y(r,+1,l) \in A)}{P_{(-1,x),v}(Y(r,-1,l) \in A)} \leq e^{\varepsilon}. \tag{2}$$

It can be said that the system is privacy preserving or private if it is $\varepsilon$-differentially private with $\varepsilon = 0$.

The focus of the present invention is on privacy preserving recommendation systems, *i.e.,* systems for which $\varepsilon = 0$. Intuitively, in privacy preserving system the obfuscation $Y$ is a random variable that does not depend on $x_0$. The distribution of $Y$ is the same, irrespective of the user's gender. The second definition states that an estimator $\hat{x}$ has optimal accuracy if it reconstructs the user's non-private features with minimum $\ell_2$ loss. This choice is natural; nevertheless, reasons for quantifying accuracy through $\ell_2$ loss in the supplement are discussed.

**Definition 2.** It can be said that a recommendation system $\mathcal{R} = (L, Y, \hat{x})$ is more accurate than $\mathcal{R}' = (L', Y', \hat{x}')$ if, for all items $\mathcal{V} \subseteq \mathbb{R}_{-0}^{d+1}$, $\sup_{x_0 \in \{\pm 1\}, x \in} xE_{(x_0, x)} V\{\|\hat{x}(y, V) - x\|_2^2\} \le \sup_{x_0 \in \{\pm 1\} x \in} xE_{(x_0, x)} V\{\|\hat{x}'(y', V) - x\|_2^2\}$, where $y = Y(r, x_0, L(V))$, $y' = Y'(r, x_0, L'(V))$. Further, it can be said that it is strictly more accurate if the above inequality holds strictly for some $V \subseteq \mathbb{R}_{-0}^{d+1}$.

Finally, an ordering between data disclosure protocols can be defined. Intuitively, a protocol $L$ discloses as much information as $L'$ if $L'$ can be retrieved from $L$.

**Definition 3.** It can be said that the recommendation system $\mathcal{R} = (L, R, \hat{x})$ discloses as much information as the system $\mathcal{R}' = (L', Y', \hat{x}')$ if there exists a measurable mapping $\varphi : \mathcal{L} \rightarrow \mathcal{L}'$ such that $L' = \varphi \circ L$ (i.e., $L'(v) = \varphi(L(v))$ for each $v \in \mathbb{R}_{-0}^{d+1}$). It can be said that $\mathcal{R} = (L, Y, \hat{x})$ and $\mathcal{R}' = (L', Y', \hat{x}')$ disclose the same amount of information if $L = \varphi \circ L'$ and $L' = \varphi' \circ L$ for some $\varphi, \varphi'$. Finally, it can be said that $\mathcal{R} = (L, Y, \hat{x})$ discloses strictly more information than $\mathcal{R}' = (L', Y', \hat{x}')$ if $L' = \varphi \circ L$ for some $\varphi$ but there exists no $\varphi'$ such that $L = \varphi' \circ L'$.

Below, it is shown that, under the linear model, the following recommendation system-that shall be referred to as the 'standard scheme' has optimality properties.

1. The data disclosure protocol releases the entry $v_0$ corresponding to the private user feature $x_0$, *i.e.,* $\mathcal{L} = \mathbb{R}$ and for all $(v_0, v) \in \mathbb{R}_{-0}^{d+1}$, $L((v_0, v)) \equiv v_0$.

2. The obfuscation protocol subtracts the contribution of the private feature of from each feedback $r_i$ and discloses this value to the recommender. Namely, $\mathcal{Y} = \mathbb{R}^M$, and for $\ell = L(V)$, $R(r, x_0, \ell) \equiv (r_1 - x_0 \ell_1, \ldots, r_M - x_0 \ell_M)$.

3. Finally, the estimation method amounts to solving the least squares problem:

$$\hat{x}(y, \mathcal{V}) \equiv \arg \min_{x \in \mathbb{R}^d} \left\{ \sum_{i=1}^{k} (y_i - \langle v_i, x \rangle)^2 \right\}. \tag{3}$$

where, $y_i$ is *i*-th component of the obfuscated feedback $y \in \mathbb{R}^M$—*i.e.*, $y_i = r_i - x_0 \ell_i$.

The estimator in (3) is referred to as the least squares estimator, and is denoted by $\hat{x}_{LS}$. It is noted that, under (1), the accuracy of the standard scheme is given by the following $\ell_2$ loss: for all $x \in \mathbb{R}^d$,

$$E_{(x_0, x), \mathcal{V}} \{\|\hat{x}_{LS}(y, \mathcal{V}) - x\|_2^2\} = \sigma^2 \text{tr}[(\sum_{i \in [M]} v_i v_i^T)^{-1}], \tag{4}$$

where $\sigma^2$ the noise variance in (1) and tr($\cdot$) is the trace.
The following theorem summarizes the standard scheme's properties:

**Theorem 1.** Under the linear model:

1. The standard scheme is privacy preserving.
2. Assume that the noise in (1) is Gaussian. Then, there is no privacy preserving recommendation system that is strictly more accurate than the standard scheme.
3. Any privacy preserving recommendation system that does not disclose as much information as the standard scheme must also be strictly less accurate.

The theorem is proved below. The second and third statements establish formally the optimality of the standard scheme. Under Gaussian noise, no privacy preserving system achieves better accuracy. Surprisingly, this is true even among schemes that disclose strictly more information than the standard scheme. There is no reason to disclose more than $v_{i0}$ for each movie. The third statement implies that, to achieve the same accuracy, the recommender system must disclose at least $v_{i0}$. In fact, the proof establishes that, in such a scenario, an $\ell_2$ loss that was finite under the standard scheme can become unbounded.

Proof of Theorem 1:

**Privacy:** To see that Theorem 1.1 holds, recall that the user releases $y_i = r_i - v_{0i}\chi_0 = \langle v_i, x \rangle + z_i$, for each $i \in M$. The distribution of $y_i$ thus does not depend on $x_0$, so the standard scheme is clearly privacy preserving.

**Maximal Accuracy:** Theorem 1.2 is proved by contradiction, using the following standard result.

**Lemma 1.** Let $(y_i, v_i) \in \mathbb{R}^{d+1}, i \in [M]$, be a set of points such that $y_i = \langle v_i, x \rangle + z_i$, with $z_i$ independent and identically distributed zero-mean Gaussian random variables, and let $\hat{x}_{LS}$ be the least squares estimator $\hat{x} = \arg\min_{x \in \mathbb{R}^d} \sum_i (y_i - \langle v_i, x \rangle)^2$. Then, for any estimator $\hat{x}$ $\sup_x E\{||\hat{x}(y_1, v_1; \ldots; y_M, v_M) - x||_2^2\} \geq \sup_x E(||\hat{x}_{LS}(y_1, v_1; \ldots; y_M, v_M) - x||_2^2)$.

Suppose that there exists a privacy preserving recommendation system $\mathcal{R}' = (L', Y', \hat{x}')$ that is strictly more accurate than the standard scheme $\mathcal{R} = (L, Y, \hat{x})$. Let $\tilde{v}_0 = (v_{10}, \ldots, v_{M0}) = L(V) \in \mathbb{R}^M$ be the disclosure under the standard scheme, and $\ell' = L'(v)$ the disclosure in $\mathcal{R}'$. Let also $\tilde{r}_i = r_i - x_0 v_{0i} = \langle v_i, x \rangle + z_i$ be the obfuscated value for $i \in [M]$ under the standard scheme, and denote by $\tilde{r} \in \mathbb{R}^M$ the vector $(\tilde{r}_1, \ldots, \tilde{r}_M)$. Since the system $R'$ is privacy preserving, its obfuscation satisfies:

$$Y'(\tilde{r} + \tilde{v}_0, +1, \ell') \overset{d}{=} Y'(\tilde{r} - \tilde{v}_0, -1, \ell'), \qquad (5)$$

i.e., the two random outputs are equal in distribution.

$L', Y'$ and $\tilde{x}'$ will be used to construct an estimator $\hat{x}''$ that has a lower $\ell_2$ loss than the least squares estimator. In particular, consider a new recommendation system $R'' = (L'', Y'', \hat{x}'')$ for which: (a) $L''(v_i) = (L(v_i), L'(v_i))$, i.e., the recommender discloses the same information as in $\mathcal{R}'$ as well as $L(v_i) = v_{i0}$, (b) $Y'' = Y$, i.e., obfuscation is as in the standard scheme and $y_i'' = \tilde{r}_i = r_i - v_{i0}x_0$, for $i \in [M]$, are released, and (c) the recommender estimates $x$ by executing the following two steps. First, it applies the obfuscation $Y'$ to $\tilde{r}$ assuming the gender is $+1$, computing $w = Y(\tilde{r} + \tilde{v}_0, +1, \ell') \in Y'$. Second, it applies the estimator $\hat{x}'$ to this output. In summary: $\hat{x}''(\tilde{r}, v) = \hat{x}'(w(\tilde{r}, v), v)$, where $w(\tilde{r}, v) = Y(\tilde{r} + \tilde{v}_0, +1, (L'(V))$. Note that, crucially, the new system $\mathcal{R}''$ has the same accuracy as $\mathcal{R}'$. This is because the input $w$ to the estimator $\hat{x}'$ is identically distributed as the inputs $y'$. This is trivially true if $x_0 = +1$, but also holds for $x_0 = -1$ by (5). This means, however, that an estimator $\hat{x}''$ that yields a loss $\sup_x E_y\{||\hat{x}''(y_1'', v_1; \ldots; y_M'', v_M) - x||_2^2\}$ strictly smaller than the corresponding loss under the least squares estimator can be constructed, a contradiction to Lemma 1.

**Minimal Disclosure:** Finally, Theorem 1.3 is proved, establishing formally that the disclosure $L(v_i) = v_{i0}$ is minimal. Any "less-informative" disclosure leads to a loss of accuracy. Consider a privacy preserving recommendation system $\mathcal{R}' = (L', Y, \hat{x}')$ that does not disclosure as much information as the standard scheme $\mathcal{R} = (L, Y, \hat{x})$. Consider a setup where $M = d$, the dimension of the feature profiles. Assume also that $V$ is such that the matrix $V = [v_i]_{i \in [d]} \in \mathbb{R}^{d \times d}$ is invertible, and denote by $\tilde{v}_0 \in \mathbb{R}^d$ the vector with coordinates $v_{i0}$.

For any $x_0 \in \{+1, -1\}, s \in \mathbb{R}^d, \ell' \in (\mathcal{L}')^d$, let $Z_{x0}(s, \ell) \in Y$ be a random variable with distribution given by $Z_{x0}(s, \ell') \overset{d}{=} Y'(s + z, x_0, \ell')$, where $z \in \mathbb{R}^M$ a vector of independent and identically distributed coordinates sampled from distribution Q. That is, $Z_{x0}(s, \ell)$ is the output of obfuscation when $Vx + x_0\tilde{v}_0 = s \in \mathbb{R}^d$, $L'(V) = \ell'$, and the gender is $x_0$. The following then holds.

**Lemma 2.** Assume $M = d$, and that the matrix $V = [v_i]_{i \in [d]} \in \mathbb{R}^{d \times d}$ is invertible. Let $\ell' = L'(V)$. Then, for all $s \in \mathbb{R}^d$, $Z_+(s, \ell') \stackrel{d}{=} Z_-(s - 2\tilde{v}_0, \ell')$.

*Proof.* By Eq. (5), for all $x \in \mathbb{R}^d$, $Y'(V x + v_0 + z, +1, \ell') \stackrel{d}{=} Y'(V x - v_0 + z, -1, \ell')$. The claim follows by the definition of $Z_\pm$ for $x = V^{-1}(s - v_0)$.

As $\mathcal{R}'$ does not leak (divulge, disclose) as much information as the standard scheme, by definition, there is no map $\varphi$ such that $v_0 = \varphi(L'(v))$ for all $v \in \mathbb{R}_{-0}^{d+1}$. In particular, there exist vectors $v, v' \in \mathbb{R}_{-0}^{d+1}$ such that $v_0 \neq v_0'$ and yet $L'(v) = L'(v)$. Consider the following two cases:

**Case 1.** The supports of $v, v'$ intersect, i.e. there exists a $k \in [d]$ such that $v_k \neq 0$ and $v_k' \neq 0$. In this case, consider a scenario in which $V = \{v\} \cup U_{1 \leq l \leq d, l \neq k} \{e_l\}$, where $e_l \in \mathbb{R}_{-0}^{d+1}$ a vector whose $l$-th coordinate is 1 and all other coordinates are zero. Clearly, $M = |V| = d$, and $V = [v_i]_{i \in [d]}$ is invertible. Let $\ell^* = L'(V)$ By Lemma 2, for all $s \in \mathbb{R}$, $Z_+(s + 2v_0 e_1, \ell^*) \stackrel{d}{=} Z_-(s, \ell^*)$, where $e_1 \in \mathbb{R}^d$ is 1 at coordinate 1 and 0 everywhere else. Similarly, in a scenario in which $V' = \{v'\} \cup U_{1 \leq l \leq d, l \neq k} \{e_l\}$, the conditions of Lemma 2 are again satisfied. Crucially $L'(V') = L(V) = \ell^*$, so again $Z_+(s + 2v_0' e_1, \ell^*) \stackrel{d}{=} Z_-(s, \ell^*)$, for all $s \in \mathbb{R}^d$. These two equations imply that, for all $s \in \mathbb{R}^d$:

$$Z_+(s + \xi e_1, \ell^*) \stackrel{d}{=} Z_+(s, \ell^*) \tag{6}$$

where $\xi \equiv 2(v_0 - v_0')$. In other words, the obfuscation is periodic with respect to the rating for movie $v$.

Observe that for any $x \in \{-1, +1\} \times \mathbb{R}^d$ and any $M \in \mathbb{R}_+$, a $x' \in \{-1, +1\} \times \mathbb{R}^d$ and a $K \in \mathbb{N}$ can be constructed such that (a) $x, x'$ differ only at coordinate $k \in \{1, 2, ..., d\}$, (b) $\langle v, x - x' \rangle = K\xi$, and (c) $\|x - x'\|_2 \geq M$. To see this, let $K$ be a large enough integer such that $\dfrac{K|\xi|}{|v_{ik}|} > M$. Taking, $x_k' = x_k + K\xi/v_k$, and $x_l' = x_l$ for all other $l$ in $\{0, 1, ..., d\}$ yields a $x'$ that satisfies the desired properties.

Suppose thus that the recommendation system $R$ is applied to $V = \{v\} \cup U_{1 \leq l \leq d, \neq k} \{e_l\}$ for a user with $x_0 = +1$. Fix a large $M > 0$. For each $x$ and $x'$ constructed as above, by (6), the obfuscated values generated by $Y'$ have an identical distribution. Hence, irrespectively of how the estimator $\hat{x}'$ is implemented, the maximum between max $(E\{\|\hat{x}'(y', V) - x\|_2^2$ and $E\{\|\hat{x}(y', V) - x'\|_2^2\})$ must be $\Omega(M^2)$ which, in turn, implies that sup $_{x0 \in \{\pm 1\}, x \in \mathbb{R}^d} E\{\|\hat{x}(y', \mathcal{V}) - x\|_2^2 = \infty$. In contrast, since the profiles in $V$ are linearly independent, $\sum_i v_i v_i^T$ is positive definite and hence invertible. As such, the loss (4) of the standard scheme is finite and the theorem follows.

**Case 2.** The supports of $v, v'$ are disjoint. In this case $v, v'$ are linearly independent, as both belong to $\mathbb{R}_{-0}^{d+1}$, and, in particular, there exist $1 \leq k, k' \leq d$, $k \neq k'$, such that $v_k \neq 0$ and $v'_{k'} \neq 0$. $V = \{v\} \cup \{v'\} U_{1 \leq l \leq d, l \neq k, l \neq k} \{e_l\}$ can be constructed, then, $|V| = d$ and the matrix $V = [v_i]_{i \in [d]}$ are again invertible. As such, by swapping the positions of $v$ and $v'$ it can be shown using a similar argument as in Case 1 that for all $s \in \mathbb{R}^d$: $Z_+(s + \xi(e_1 - e_2), \ell^*) \stackrel{d}{=} Z_+(s, \ell^*)$ were $\xi \equiv 2(v_0 - v_0')$ and $\ell^* = L(V)$, i.e., $Z_+$ is periodic in the direction $e_1 - e_2$. Moreover, for any $x \in \{-1, +1\} \times \mathbb{R}^d$ and any $M \in \mathbb{R}_+$, similarly a $x' \in \{-1, +1\} \times \mathbb{R}^d$ and a $K \in \mathbb{N}$ can be constructed such that (a) $x, x'$ differ only at coordinates $k, k' \in \{1, 2, ..., d\}$, and (b) $\langle v, x - x' \rangle = -\langle v', x - x' \rangle = K\xi$, and (c) $\|x - x'\|_2 \geq M$. The construction adds $K\xi/v_k$ at the $k$-th coordinate subtracts $K\xi/v_k'$ from the $k'$-th coordinate, where $K > M$ max $(v_k, v'_k)/\xi$. A similar argument as in Case 1 therefore yields the theorem.

Several aspects of the model of the present invention call for a more detailed discussion.

**Leakage (Disclosure, Divulgation) Interpretation.** In the standard scheme, the disclosed (divulged, leaked) information $v_{i0}$ is the parameter that gauges the impact of the private feature on the user's feedback. In the running example, it is the impact of the gender on the user's appreciation of movie $i$. For the linear model (1), this parameter has a simple interpretation, if in a population of users for which the other features $x$ are distributed independently of the gender. Indeed, assume a prior distribution on $(x_0,x)$ such that $x$ is independent of $x_0$. Then: $E\{r_i|x_0 = +\}-E\{r_i|x_0 = -\} = \langle v,E\{x|x0 = +\}-E\{x|x_0 = -\}\rangle+2v_{i0} = 2vi_0$. Hence, given access to a dataset of user feedback, in which users are not privacy-conscious, and have disclosed their gender, the recommender need only compute the average rating of a movie per gender. Disclosing $v_{i0}$ amounts to releasing the half distance between these two values.

**Inference from Movie Selection.** In practice, generating all ratings in $[M]$ may correspond to a high cost in time. It thus makes sense to consider the following constraint: there exists a set $S_0$ (e.g., the movies the user has viewed) such that the obfuscated set of ratings must satisfy $S \subseteq S_0$. In this case, $S_0$ itself might reveal the user's gender.

A solution is presented when viewing events are independent, i.e.: $P_{x0}(S_0 = A) = \Pi_{i\in A}p_i^{x_0} \prod_{i\notin A}(1 -p_i^{x_0})$,

where $p_i^{x_0}$ is the probability that the user has viewed movie $i$, conditioned on the value of his/her gender $x_0$. Consider the following obfuscation protocol. First, given $S_0$, the user generates and discloses feedback for movie $i \in S_0$ independently, constructing thusly a set $S$, whereby:

$$P(i \in S|i \in S_0) = \max(1,p_i^{x_0}/p_i^{\bar{x}_0}),\qquad(7)$$

for $\bar{x}_0$ is the complement of $x_0$. Ratings for $i \in S$ are revealed after applying the standard scheme.

This obfuscation has the following desirable properties. First, $S \subseteq S_0$. Second, it is privacy preserving. To see this note that $P_{x0}(i \in S) = \max(1,p_i^{x_0}/p_i^{\bar{x}_0}) \times p_i^{x_0} = \min(p_i^{x_0},p_i^{\bar{x}_0})$, i.e., it does not depend on $x_0$. Finally, the set S is maximal: there is no privacy preserving method for generating a set $S'\subset S_0$ such that $E\{|S'|\} > E\{|S|\}$. To see this, note that, for any scheme such that if $E\{|S'|\} > E\{|S|\}$, there exists an $i$ such that $P_{x0}(i \in S') > P_{x0}(i \in S) = \min(p_i^+,p_i^-)$. If the scheme is privacy preserving, this must be true for both $x_0$; however, as $S \subseteq S_0$, it must be that

$P_{x0}(i \in S) \leq p_i^{x_0}$ for both $x_0$, a contradiction. Motivated by the maximality of this obfuscation scheme, it is used below as a means select only a subset of the movies rated by a user.

The standard scheme of the present invention is evaluated on a movie recommender system. Users of the system provide an integer rating between 1 and 5 for the movies they have watched, and in turn expect the system to provide useful recommendations. Gender is defined as the private value that users do not want to reveal to the recommender, which is known to be inferable from movie ratings with high accuracy. Datasets from two movie rating services are used: MovieLens and Flixster. Both contain the gender of every user. The datasets are restricted to users that rated at least 20 movies and movies that were rated by at least 20 users. As a result, the MovieLens dataset has 6K users (4319 males, 1703 females), 3043 movies, and 995K ratings. The Flixster dataset has 26K users (9604 males, 16433 females), 9921 movies, and 5.6M ratings.

To assess the success of obfuscation in practice, several standard methods are applied to infer gender from ratings, including Naive Bayes (NB), Logistic Regression (LR) and Support Vector Machines (SVM) and a new method similar to Linear Discriminant Analysis (LDA) is proposed. The latter method is based on the linear model (1), and assumes a Gaussian prior on x and a Bernoulli prior on the gender $x_0$. Under these priors, ratings are normally distributed with a mean determined by $x_0$, and the maximum likelihood estimator of $x_0$ is precisely LDA in a space with dimension of the number of movies viewed. Each inference method is evaluated in terms of the area under the curve (AUC). The input to the LR, NB and SVM methods comprises the ratings of all movies given by the user as well as zeros for movies not rated. LDA on the other hand operates only on the ratings that the user provided.

The standard obfuscation scheme is studied both with and without the selection scheme, which is performed using the maximal scheme (7) discussed above. The movie vectors $V$ are constructed as follows. For each movie, gender biases $v_0$ are computed as the half distance between the average movie ratings per each gender. Using these values, the remaining features $v$ were computed through matrix factorization with $d = 20$. These are computed from the non-obfuscated ratings. Matrix factorization was performed using gradient descend, 20 iterations, regularization parameter of 0.02, selected through cross validation.

When using the standard scheme, the new rating may not be an integer value, and potentially may even be outside of the range of rating values which is expected by the recommender system. To that end, a variation that rounds the rating value to an integer in range [1,5] is considered. Given a non-integer obfuscated rating $r$, which is between two

integers $k = \lfloor r \rfloor$ and $k + 1$, rounding is performed by assigning the rating $k$ with probability $r - k$ and the rating $k + 1$ with probability $1 - (r - k)$, which on expectation gives the desired rating $r$, if ratings higher than 5 or lower than 1 are truncated to 5 or 1, respectively. For brevity, this entire process is referred to as "Rounding". Two baselines for obfuscation are also considered. The movie average scheme replaces a user's rating with the average rating of the movie. The gender average scheme replaces the user's rating with the average rating provided by males or females, each with probability 0.5.

The accuracy of the recommendations in terms of the root mean square error (RMSE) of the ratings is measured. To this end, the user's ratings are split to training and evaluation sets. First the obfuscation method is applied to the training set, and then x is estimated through ridge regression over the obfuscated ratings with regularization parameter of 0.1. Ratings of the movies in the evaluation set are predicted using the linear model (1), where $x_0$ is provided from the LDA inference method. Experiments with the other inference methods were conducted with similar results.

The proposed obfuscation and inference methods were run on both datasets. A 10-fold cross validation on the users was used, and the mean AUC and RMSE were computed across the folds. The summary of all the evaluations is shown in Table 1. The table provides the AUC obtained by the different inference methods under the various obfuscation methods detailed above, as well the RMSE for each obfuscation method.

Several observations are consistent across the two datasets. First, inference methods are affected differently by the obfuscation methods, with LR, NB and SVM being mostly affected by the selection scheme whereas LDA is mostly affected by the standard obfuscation scheme of the present invention. However, when both selection and the standard obfuscation scheme are used, the AUC of all methods reduces to roughly 0.5. Furthermore, the impact of the obfuscation methods on the RMSE is not high, with a maximum increase of 1.5%. This indicates that although the obfuscation schemes manage to hide the gender, rating prediction is almost unaffected. The standard obfuscation scheme of the present invention performs almost exactly the same when rounding is introduced. Compared to the standard scheme (SS), baseline schemes result in a similar AUC but higher RMSE, indicating that aggressive obfuscation comes at a cost of losing the recommendation accuracy without considerable benefits in AUC.

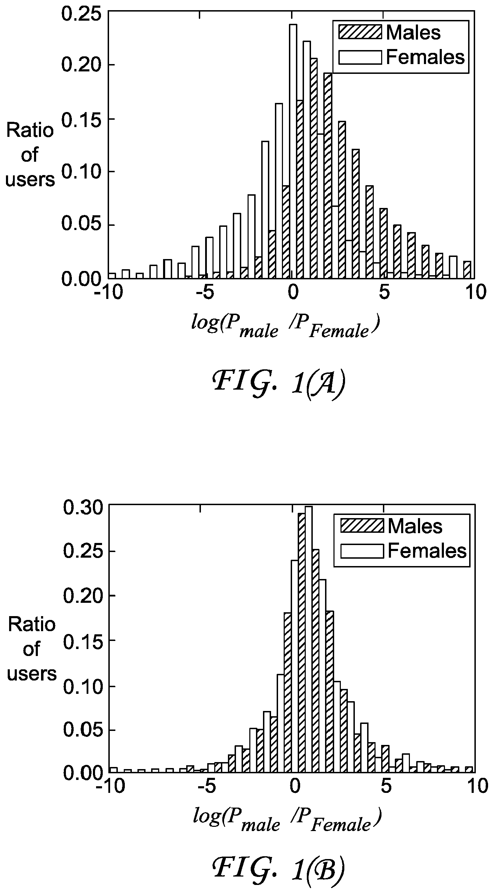

To illustrate how obfuscation affects the inference accuracy, Figs. 1(a) and 1(b) show the distribution of log $(P_{Male}/P_{Female})$, with $P_{Male}$ and $P_{Female}$ obtained through logistic regression, before obfuscation and after obfuscation with the standard scheme and selection, respectively. Prior to obfuscation, there is a clear separation between the distributions of males and females, enabling a successful gender inference. However, after obfuscation, the two distributions become indistinguishable.

|  | MovieLens | | | | Flixster | | | | |
|---|---|---|---|---|---|---|---|---|---|
| Obfuscation Method | Inference Methods (AUC) | | | RMSE SVM | Inference Methods (AUC) | | | | RMSE NB |
|  | LDA | LR | NB |  | SVM | LDA | LR | NB |  |
| No obfuscation | 0.810 | 0.850 | 0.780 | 0.859 | 0.897 | 0.801 | 0.851 | 0.747 | 0.878 |
| SS | 0.545 | 0.820 | 0.764 | 0.831 | 0.900 | 0.575 | 0.815 | 0.728 | 0.883 |
| SS w/Rounding | 0.579 | 0.823 | 0.766 | 0.834 | 0.900 | 0.608 | 0.821 | 0.731 | 0.885 |
| Movie Average | 0.762 | 0.801 | 0.790 | 0.849 | 0.990 | 0.755 | 0.811 | 0.665 | 1.044 |
| Gender Average | 0.782 | 0.838 | 0.777 | 0.847 | 0.990 | 0.762 | 0.836 | 0.735 | 1.044 |
| Selection | 0.717 | 0.532 | 0.555 | 0.554 | 0.899 | 0.735 | 0.581 | 0.576 | 0.884 |
| Selection+SS | 0.450 | 0.473 | 0.531 | 0.504 | 0.904 | 0.518 | 0.533 | 0.554 | 0.890 |
| Selection+SS w/Rounding | 0.486 | 0.487 | 0.532 | 0.509 | 0.905 | 0.548 | 0.539 | 0.557 | 0.892 |
| Selection+Movie Average | 0.558 | 0.466 | 0.538 | 0.467 | 0.990 | 0.497 | 0.503 | 0.546 | 1.049 |
| Selection+Gender Average | 0.561 | 0.431 | 0.531 | 0.469 | 0.992 | 0.601 | 0.495 | 0.542 | 1.049 |

**Table 1:** Obfuscation Results. SS denotes the *Standard Scheme.*

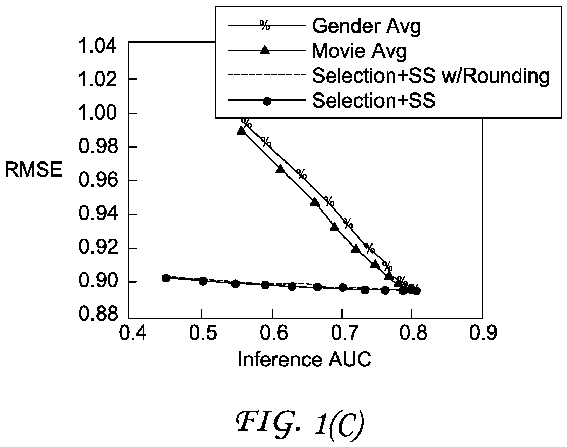

The privacy-accuracy tradeoff is studied by applying an obfuscation scheme with probability $\alpha$, and releasing the real rating with probability $1 - \alpha$. Fig. 1(c) shows the resulting RMSE-AUC tradeoff curves for the three obfuscation schemes. The figure shows that the standard scheme combined with selection provides the best privacy-accuracy tradeoff, and consistently obtains better accuracy (lower RMSE) for the same privacy (inference AUC). Finally, as also seen in Table 1, rounding has no significant effect on the results and the curves almost completely overlap.

It is natural to extend the questions we introduced in this work to more general inference setting beyond the linear model we study here. In particular, quantifying the amount of information whose release is necessitated to ensure privacy and accuracy under more general parametric problems remains an interesting open question. In addition, our focus here was on privacy-preserving recommendation systems. There are several ways of relaxing our privacy constraint, including the use of differential privacy, with $\epsilon > 0$.

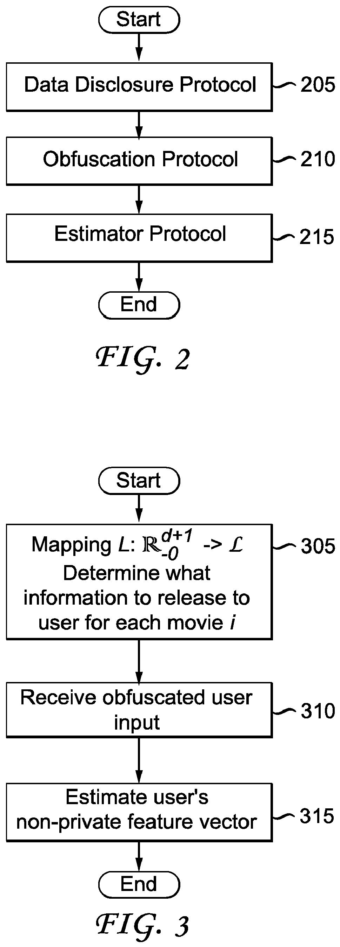

Fig. 2 is a flowchart of the recommender system of the present invention. The recommender system includes a user portion and a recommender portion. Fig. 2 is a flowchart of the overall operation of an exemplary embodiment of the recommender system. The goal of the recommender system is to provide the user with accurate recommendation while preserving the user's private information. The present invention has been explained above using gender as the private information (characteristic, feature) but other features may include age, political affiliation etc. that is, the present invention is not so limited as to use gender alone as the user's private information. At 205 the data protocol portion of the recommender system is executed. At 210 the obfuscation protocol portion of the recommender system is executed. At 215 the estimator protocol portion of the recommender system is executed.

Fig. 3 is an enlarged view of the recommender portion of the recommender system of the present invention. Specifically, Fig. 3 includes an enlargement of elements 205 and 215 of Fig. 2. At 305, there is a mapping $L: \mathbb{R}_{\geq 0}^{d+1} \to \mathcal{L}_y$.

A determination is made as to what information is released to the user for each movie *i*. This, of course, includes releasing (transmitting, transferring, forwarding, sending) the information to the user. Movie information may be a movie profile or movie feature vectors. At 310 the recommender portion of the recommender system receives (accepts) the obfuscated user information. At 315 there is a mapping of the form: $\widehat{x}: \mathcal{Y} \times \left(\mathbb{R}_{-0}^{(d+1)}\right)^M \to \mathbb{R}^d$. The recommender portion of the recommender system estimates the user's non-private feature vector.

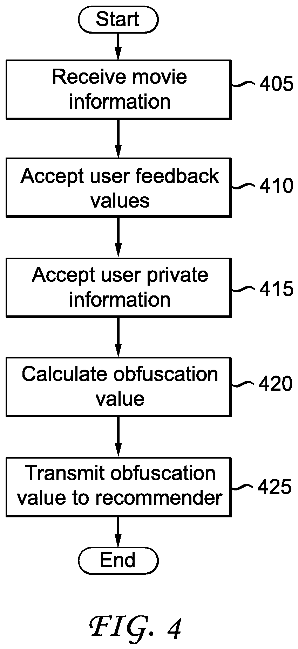

Fig. 4 is an enlarged view of the user portion of the recommender system of the present invention. Specifically, Fig. 4 is an enlargement of element 210 of Fig. 2. At 405, the user portion of the recommender system receives (accepts) the movie information from the recommender portion (data disclosure protocol portion) of the recommender system. At 410, the user portion of the recommender system accepts (receives) user feedback values. At 415, the user portion of the recommender system accepts (receives) user private information (characteristics, features, values, data). At 420, the user portion of the recommender system calculates an obfuscation value. This is done by subtracting the contribution of the user's private information (features, characteristics, values, data) from each feedback. At 425, the calculated obfuscation value is transmitted to the recommender portion of the recommender system.

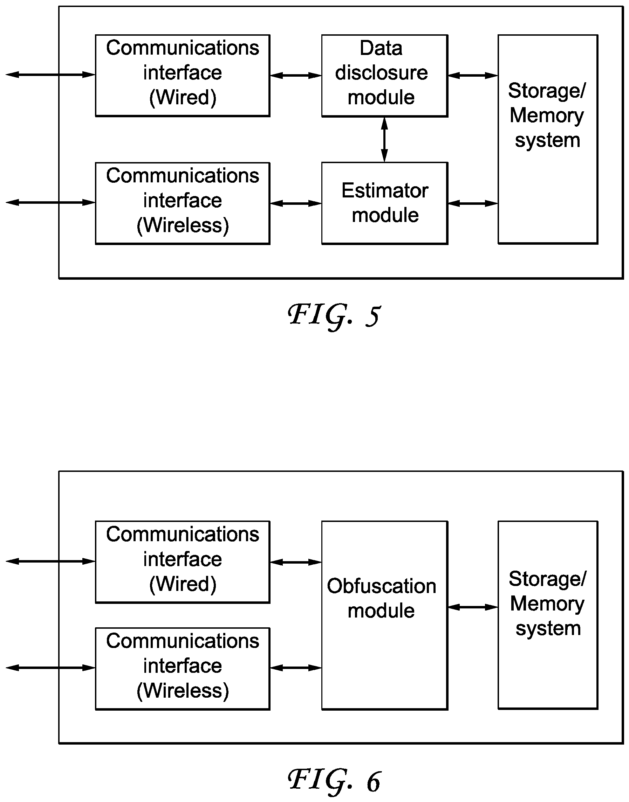

Fig. 5 is a block diagram of the recommender portion of the recommender system of the present invention. The recommender portion of the recommender system of the present invention may be implemented on a mainframe computer or on a desktop, laptop, tablet, iPod, iPhone, iPod, dual mode smart phone or any other wired or wireless computing device. The recommender portion of the recommender system includes at least one of a wired communications interface and a wireless communications interface and may include both types of communications interfaces. A wireless communications interface also includes appropriate antennas. The communications interfaces operate to accept data (information, features, values) and to transmit (send, forward) data (information, features, values). The data disclosure module and the estimator module may be implemented on separate processors or a single processor. The data disclosure module and the estimator module are in bi-directional communication with each other (if not implemented on a single processor) and with the communications interfaces. The data disclosure module and the estimator module are also in bi-directional communication with a storage or memory system, which may be any form of memory including removable and fixed storage systems. The data disclosure module includes the means for determining what information to release to a user for a movie. The communications interfaces (wired or wireless) include means for transmitting said information to the user and means for accepting obfuscated input from the user. The estimator module includes means for estimating the user's non-private feature vector.

Fig. 6 is a block diagram of the user portion of the recommender system of the present invention. The user portion of the recommender system of the present invention may be implemented on a desktop, laptop, tablet, iPod, iPhone, iPod, dual mode smart phone or any other wired or wireless computing device. The user portion of the recommender system includes at least one of a wired communications interface and a wireless communications interface and may include both types of communications interfaces. A wireless communications interface also includes appropriate antennas. The communications interfaces operate to accept data (information, features, values) and to transmit (send, forward) data (information, features, values). The obfuscation module may be implemented on one or more processors. The obfuscation module is in bi-directional communication with the communications interfaces. The obfuscation module is also in bi-directional communication with a storage or memory system, which may be any form of memory including removable and fixed storage systems. The obfuscation module includes means for calculating an obfuscation value. The communications interfaces (wired or wireless) include means for accepting a user's movie feedback, means for accepting user's private information and means for transmitting the obfuscation value.

It is to be understood that the present invention may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

**Claims**

1. A method for protecting user privacy in a recommender system, said method comprising:

   receiving (405) movie information;
   accepting (410) a user's movie feedback;
   accepting (415) user's private information;
   calculating (420) an obfuscation value to protect said user's private information, said obfuscation value is calculated using said user's movie feedback and said user's private information; and
   transmitting (425) said obfuscation value.

2. The method according to claim 3, wherein said obfuscated value from said user includes movie feedback and said user's private information obfuscated to protect user private information, wherein said movie feedback includes movie rating or movie rankings, and wherein said user private information includes characteristics, features, values or data, and further wherein said obfuscation value is calculated by subtracting a contribution of said user's private information from said user's movie feedback.

3. An apparatus for protecting user privacy in a recommender system, comprising:

   means for receiving movie information;
   means for accepting a user's movie feedback;
   means for accepting user's private information;
   means for calculating an obfuscation value to protect said user's private information, said obfuscation value is calculated using said user's movie feedback and said user's private information; and
   means for transmitting said obfuscation value.

4. The apparatus according to claim 7, wherein said obfuscated value from said user includes movie feedback and said user's private information obfuscated to protect user private information, and wherein said movie feedback includes movie rating or movie rankings, and further wherein said user private information includes characteristics, features, values or data.

FIG. 1(A)

FIG. 1(B)

*FIG. 1(C)*

Start

Data Disclosure Protocol ⌐ 205

Obfuscation Protocol ⌐ 210

Estimator Protocol ⌐ 215

End

*FIG. 2*

Start

Mapping $L: \mathbb{R}^{d+1}_{-0} \to \mathcal{L}$
Determine what
information to release to
user for each movie $i$ ⌐ 305

Receive obfuscated user
input ⌐ 310

Estimate user's
non-private feature vector ⌐ 315

End

*FIG. 3*

```
        ( Start )
            |
            v
   +------------------+
   | Receive movie    |~ 405
   | information      |
   +------------------+
            |
            v
   +------------------+
   | Accept user      |~ 410
   | feedback values  |
   +------------------+
            |
            v
   +------------------+
   | Accept user      |~ 415
   | private          |
   | information      |
   +------------------+
            |
            v
   +------------------+
   | Calculate        |~ 420
   | obfuscation      |
   | value            |
   +------------------+
            |
            v
   +------------------+
   | Transmit         |~ 425
   | obfuscation      |
   | value to         |
   | recommender      |
   +------------------+
            |
            v
        ( End )
```

*FIG. 4*

*FIG. 5*

*FIG. 6*

EP 3 267 353 A1

Europäisches
Patentamt
European
Patent Office
Office européen
des brevets

**EUROPEAN SEARCH REPORT**

Application Number

EP 17 18 1127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | UDI WEINSBERG ET AL: "BlurMe: Inferring and obfuscating user gender based on ratings", PROCEEDINGS OF THE SIXTH ACM CONFERENCE ON RECOMMENDER SYSTEMS, RECSYS '12, 1 January 2012 (2012-01-01), page 195, XP055089398, New York, New York, USA DOI: 10.1145/2365952.2365989 ISBN: 978-1-45-031270-7 * the whole document * | 1-4 | INV.<br>G06F21/62<br>G06Q30/02<br>H04N21/258<br>H04N21/475<br>H04N21/482 |
| A | SHYONG K TONY LAM ET AL: "Do You Trust Your Recommendations? An Exploration of Security and Privacy Issues in Recommender Systems", 1 January 2006 (2006-01-01), EMERGING TRENDS IN INFORMATION AND COMMUNICATION SECURITY LECTURE NOTES IN COMPUTER SCIENCE;;LNCS, SPRINGER, BERLIN, DE, PAGE(S) 14 - 29, XP019034219, ISBN: 978-3-540-34640-1 * the whole document * | 1-4 | |
| | | | TECHNICAL FIELDS SEARCHED (IPC) |
| A | PARAMESWARAN R ET AL: "Privacy Preserving Collaborative Filtering Using Data Obfuscation", GRANULAR COMPUTING, 2007. GRC 2007. IEEE INTERNATIONAL CONFERENCE ON, IEEE, PISCATAWAY, NJ, USA, 2 November 2007 (2007-11-02), page 380, XP031338658, ISBN: 978-0-7695-3032-1 * the whole document * | 1-4 | G06F<br>G06Q<br>H04N |

The present search report has been drawn up for all claims

| Place of search | Date of completion of the search | Examiner |
|---|---|---|
| Munich | 7 September 2017 | Mäenpää, Jari |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

**REFERENCES CITED IN THE DESCRIPTION**

**Patent documents cited in the description**

- US 61761330 A

**Non-patent literature cited in the description**

- **WEINSBERG et al.** Blurme: inferring and obfuscating user gender based on ratings. *Proceedings of the Sixth ACM Conference on Recommender Systems,* 2012